# EUROPEAN PATENT APPLICATION

(11) **EP 1 541 966 A1**
(43) Date of publication of application: **15.06.2005**
(21) Application number: 03791296.1
(22) Date of filing: 26.08.2003
(51) Int. Cl.: G01C 19/00

(54) **METHOD AND DEVICE FOR HEAD TRACKING**

(30) Priority: 28.08.2002 JP 2002249443
(71) Applicant: Sony Corporation, Tokyo 141-0001 (JP)
(72) Inventor: KURATA, Masatomo, Shinagawa-ku, Tokyo 141-0001 (JP)
(74) Representative: Mills, Julia
(86) International application number: PCT/JP2003/010776
(87) International publication number: WO 2004/020946

(57) **Abstract**

When the three-dimensional direction the head faces is detected by three axes, that is, a yaw angle that is an angle turning around an erect axis erected on the horizontal surface of the head, and a pitch angle and a roll angle that are angles formed by the above erect axis and two axes perpendicular thereto, a gyro sensor 11 which detects the yaw angle from the integral value of the acceleration, a tilt sensor 12 which detects the inclination of a plane that intersects the direction of the erect axis at right angles, and calculation element 14 which calculates the pitch angle and the roll angle from the output of a tilt sensor are provided, so that the direction that the head faces can be detected with a simple detecting structure including the two sensors, in a head mounted display or the like.

## Description

### TECHNICAL FIELD

The present invention relates to a head-tracking method and device which detect the direction that the head faces in a head mounted display or the like.

### BACKGROUND ART

In recent years, various kinds of method and device which detect by a sensor the three-dimensional direction that the head of a person faces and which display video in the direction detected on a head mounted display (HMD) worn on the head have been put into practical use to obtain what is called "virtual reality".

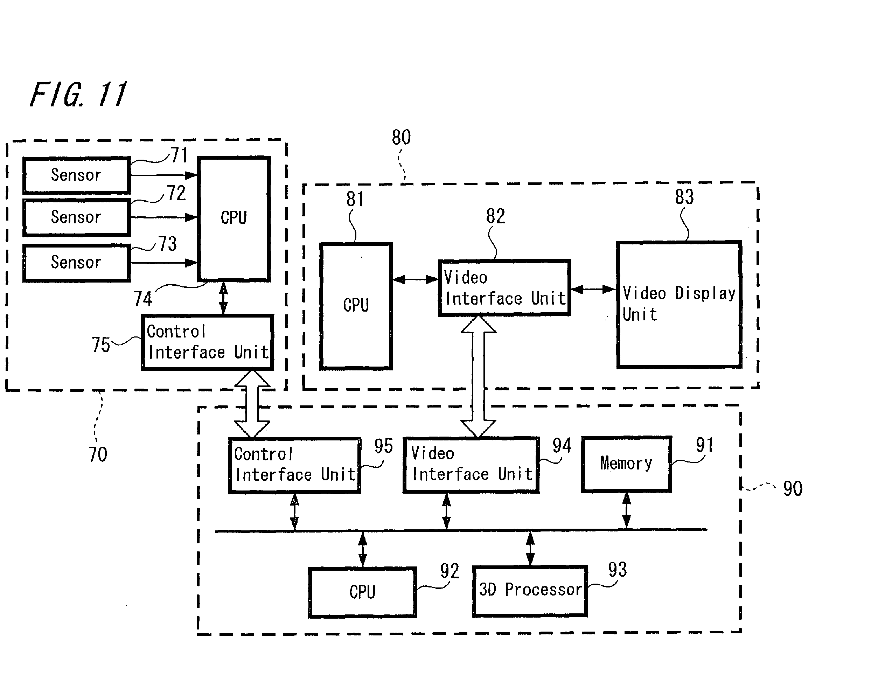

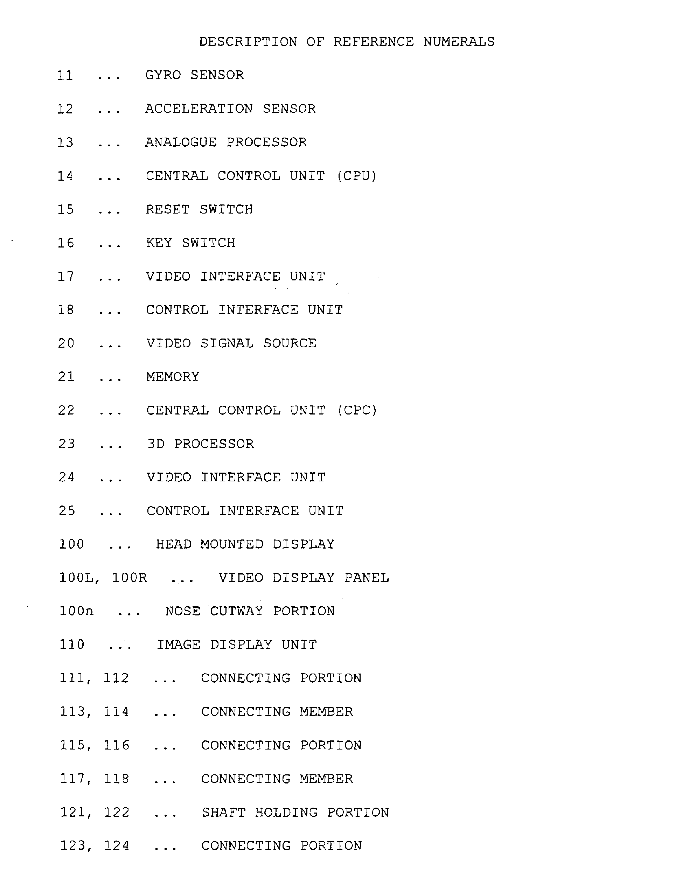

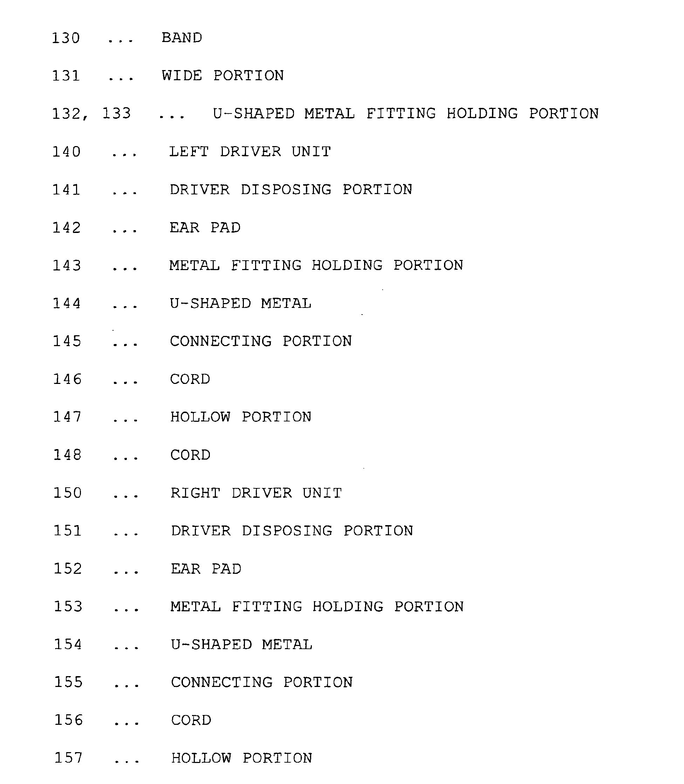

FIG. 11 is a diagram showing an example of a configuration of a conventional head mounted display. In this example, the conventional head mounted display includes a sensor unit 70 which detects the movement of the head, a head mounted display unit 80 which is worn on the head, and a host unit 90 which supplies video signals to the video display unit 80. The sensor unit 70 includes three sensors 71, 72 and 73 which detect the movement of the head of a person in a three-dimensional manner, a central control unit 74 which calculates the three-dimensional movement of the head of a person based on outputs of respective sensors 71, 72 and 73, and a control interface unit 75 which transmits data in the direction that the front of the head faces calculated in the central control unit 74 to the host unit 90.

The three sensors 71, 72 and 73 are, for example, angular velocity sensors which separately detect the accelerations in the directions of the three axes that intersect each other at right angles, and the three-dimensional movement of the head is judged in the central control unit 74 based on the judgment on the acceleration of each of the three axes.

The host unit 90 includes, for example, a memory 91 which stores video data of the whole environment of a certain point, a central control unit 92 which retrieves video data in the direction detected by the sensor unit 70 from among the video data stored in the memory 91 and then supplies the video data to a 3D processor 93, the 3D processor 93 which makes the supplied video data into video data for picture display, and a video interface unit 94 which supplies the video data made in the 3D processor 93 to the head mounted display unit 80.

The head mounted display unit 80 includes a central control unit 81 which controls video display, a video interface unit 82 which receives the video data supplied from the host unit 90, and an video display unit 83 which performs display processing on the video data that the video interface unit 82 has received. Regarding the video display unit 83, a liquid crystal display panel disposed in the vicinity of the left and right eyes is used as displaying means, for example. Conventionally, the sensor unit 70 and the head mounted display unit 80 are integrally formed. The host unit 90 is formed, for example, of a personal computer apparatus and mass-storage means such as a hard disc or optical disc.

Preparing a head mounted display configured in this manner makes it possible to display a video which is linked to a movement of the head of a wearer; therefore, a video of what is called virtual reality can be displayed.

However, a conventional head mounted display requires three acceleration sensors, which separately detect the acceleration of each of the three orthogonal axes, as a sensor unit which detects the movement of the head, resulting in a problem of making the configuration complicated. In particular, a head mounted display is a piece of equipment worn on a user's head, so that it is preferable to be compact and light and the fact that three sensors are necessary has been unfavorable. The present invention has been made in light of the above problems, and aims at detecting the direction that the head faces with a simple sensor structure.

### DISCLOSURE OF INVENTION

A first aspect of the present invention is a head-tracking method in which the three-dimensional direction the head faces is detected by three axes of a yaw angle that is an angle turning around an erect axis erected on the horizontal surface of the head and a pitch angle and a roll angle that are angles formed of the erect axis and two axes perpendicular to the erect axis, wherein the yaw angle is judged from the integral value of the output from a gyro sensor, and the pitch angle and roll angle are calculated from the output of a tilt sensor which detects the inclination of a plane that intersects the direction of the erect axis at right angles.

Accordingly, the three-dimensional direction the head faces can be detected only with the outputs of two sensors which are the gyro sensor and the tilt sensor, and a system in which head tracking is performed can be obtained with ease at low cost.

A second aspect of the present invention is the head-tracking method according to the first aspect of the present invention, in which a period to judge the yaw angle from the output of the gyro sensor is shorter than that to calculate the pitch angle and the roll angle from the output of the tilt sensor.

Accordingly, the yaw angle can be judged accurately based on the short-period judgment on a dynamic angular velocity output from the gyro sensor, and the pitch angle and the roll angle are calculated from the static acceleration of gravity, so that the pitch angle and the roll angle are detected accurately without fail, even if the detection period lengthens to some extent, and therefore, the angles of the three axes can be accurately detected with a favorable calculation distribution.

A third aspect of the present invention is the head-tracking method according to the first aspect of the present invention, in which the yaw angle judged from the output of the gyro sensor is corrected using the pitch angle and the roll angle judged.

Accordingly, the yaw angle can be judged even more accurately.

A fourth aspect of the present invention is a head-tracking device in which the three-dimensional direction the head faces is detected by three axes of a yaw angle that is an angle turning around an erect axis erected on the horizontal surface of the head, and a pitch angle and a roll angle that are angles formed of the erect axis and two axes perpendicular to the erected axis, including a gyro sensor which detects the yaw angle, a tilt sensor which detects the inclination of a plane that intersects the direction of the erect axis at right angles, and calculation means to judge the yaw angle from the integral value of the output from the gyro sensor and to calculate the pitch angle and the roll angle from the angular velocity output from the tilt sensor.

Accordingly, the three-dimensional direction the head faces can be detected only by providing two sensors, which are the gyro sensor and the tilt sensor, and a system in which head tracking is performed can be obtained with ease at low cost.

A fifth aspect of the present invention is the head-tracking device according to the fourth aspect of the present invention, in which with respect to the calculation means, a period to judge the yaw angle from the output of the gyro sensor is shorter than that to calculate the pitch angle and the roll angle from the output of the tilt sensor.

Accordingly, the yaw angle can be judged accurately based on the short-period judgment on a dynamic angular velocity output from the gyro sensor, and the pitch angle and the roll angle are calculated from the static acceleration of gravity, so that the pitch angle and the roll angle are detected accurately without fail, even if the detection period lengthens to some extent, and therefore, the angles of the three axes can be accurately detected with a favorable calculation distribution.

A sixth aspect of the present invention is the head-tracking device according to the fourth aspect of the present invention, in which the calculation means performs correction of the yaw angle judged from the output of the gyro sensor using the pitch angle and the roll angle calculated. Accordingly, the yaw angle can be judged even more accurately.

### BRIEF DESCRIPTION OF DRAWINGS

FIG. 1 is a perspective view showing an example in which a head mounted display according to an embodiment of the present invention is being worn;
FIG. 2 is a perspective view showing an example of the shape of a head mounted display according to an embodiment of the present invention;
FIG. 3 is a side view of the head mounted display of the example in FIG. 2;
FIG. 4 is a perspective view showing an example of a state in which a video display unit of the head mounted display of the example in FIG. 2 is lifted;
FIGS. 5A and 5B are explanatory diagrams showing reference axes according to an embodiment of the present invention;
FIG. 6 is an explanatory diagram showing a detection state by sensors according to an embodiment of the present invention;
FIG. 7 is a block diagram showing an example of a system configuration according to an embodiment of the present invention;
FIG. 8 is a flow chart showing an example of head-tracking processing according to an embodiment of the present invention;
FIG. 9 is a flow chart showing an example of two-axis sensor processing according to an embodiment of the present invention;
FIG. 10 is a flow chart showing an example of gyro sensor processing according to an embodiment of the present invention; and
FIG. 11 is a block diagram showing an example of a system configuration of a conventional head mounted display.

### BEST MODE FOR CARRYING OUT THE INVENTION

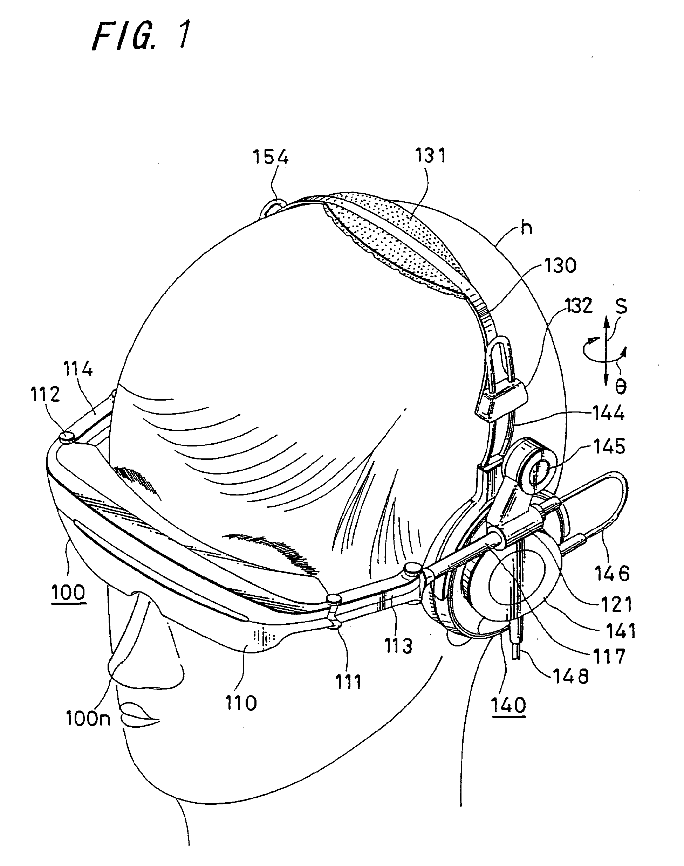

Hereinafter, an embodiment of the present invention will be explained referring to FIGS. 1 to 10.

FIG. 1 is a view showing an example in which a head mounted display of this embodiment is being worn. A head mounted display 100 of this embodiment is shaped like headphones worn above the left and right auricles of the head h of a user; and to the headphones-like shape, a video display unit is attached. FIG. 1 shows a state in which a video display unit 110 is positioned in front of the user's eyes to watch and listen to video and audio. This head mounted display 100 is connected to an video signal source not shown in the figure through a cable 148, and video supplied from the video signal source is displayed in the video display unit 110 and audio supplied is output from driver units worn on the left and right auricles. In this embodiment, sensors which detect the direction a wearer faces are incorporated in the head mounted display 100, and a video corresponding to the direction the wearer has faced, which has been detected based on the outputs of the sensors, is supplied from the video signal source to the head mounted display 100 to be displayed. With respect to audio, a sound of a phase corresponding to the direction the wearer faces may also be output as a stereo audio signal.

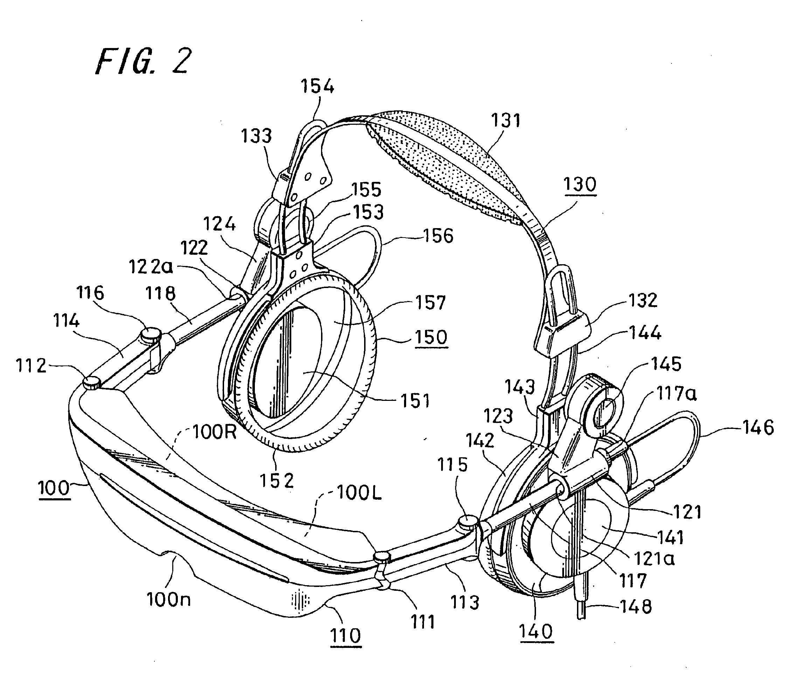

FIG. 2 shows an example of the shape of the head mounted display 100. With respect to the head mounted display 100 of this embodiment, a left driver unit 140 and a right driver unit 150 are connected by a band 130, and the rectangular-shaped video display unit 110 is attached being supported by the left and right driver units 140 and 150. The band 130 is formed of an elastic material, and the left and right driver units 140 and 150 are pushed toward the auricle sides of a wearer with relatively small force to be held by the head. Further, when not being worn on the head, the left and right driver units 140 and 150 come close to each other to be partly in contact with each other.

With respect to the band 130, a wide portion 131 is formed in the middle thereof, so that the head mounted display 100 can be held by the head of a wearer stably. Further, U-shaped metal fitting holding portions 132 and 133 are formed at one end and the other end of the band 130, and positions somewhere along U-shaped metal fittings 144 and 154 attached to the upper ends of the driver units 140 and 150 are held by the U-shaped metal fitting holding portions 132 and 133. Adjustment according to the size of the head of the wearer can be made by changing the positions where those U-shaped metal fittings 144 and 154 are held by the holding portions 132 and 133.

With respect to the driver units 140 and 150, driver disposing portions 141 and 151 are provided in the middle, in which circular drivers (loudspeaker units) that output a sound when supplying an audio signal are disposed inside, and annular ear pads 142 and 152 are attached around the driver disposing portions 141 and 151. Between the driver disposing portions 141 and 151 and the ear pads 142 and 152 in this embodiment are provided hollow portions 147 and 157 respectively, so that the driver disposing portions 141 and 151 will be positioned somewhat apart from a wearer's auricles to form what is called full-open-air type headphones.

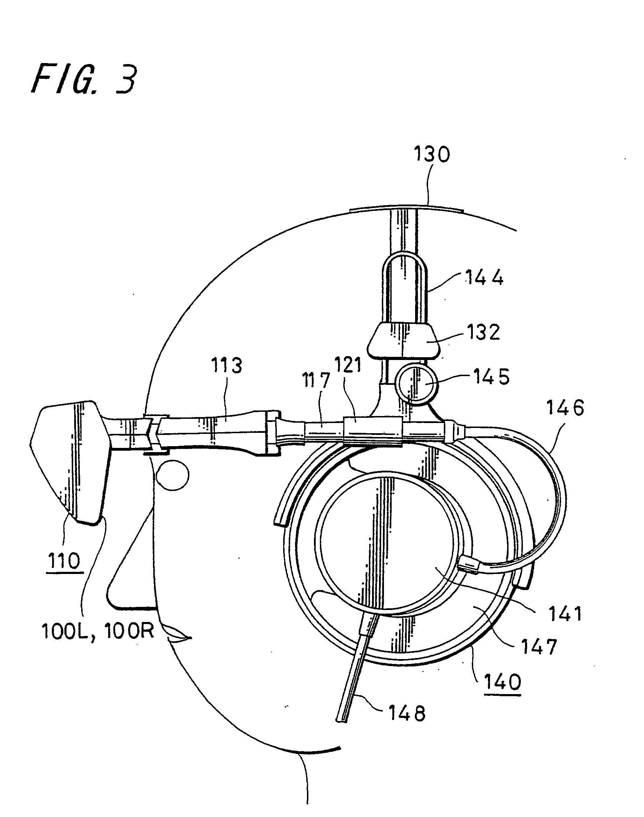

With respect to the video display unit 110, a video display panel 100L for the left eye is disposed in front of the left eye of a wearer, and a video display panel 100R for the right eye is disposed in front of the right eye of the wearer. In FIGS. 1 and 2, since the video display unit 110 is seen from the outside, the video display panels 100L and 100R cannot be seen. For example, a liquid crystal display panel is used for each of the video display panels 100L and 100R. FIG. 3 is a view in which the wearing state is seen exactly from one side, and the state in which the left and right video display panels 100L and 100R are positioned in front of a wearer's eyes can be recognized. It should be noted that video display means such as a liquid crystal display panel is not necessarily positioned close to the eyes, and there may be the case in which a display panel is disposed inside the video display unit 110 and through optical parts a picture is displayed as if the picture were right in front of a wearer's eyes. Further, in the case where illuminating means such as a backlight is necessary, it is also incorporated in the video display unit 110.

Between the left and right liquid crystal display panels 100L and 100R and at the lower portion thereof is provided a nose cutaway portion 100n in order for the video display unit 110 not to touch a wearer's nose while a head mounted display is being worn as shown in FIG. 1.

As a mechanism in which the video display unit 110 is supported by the left and right driver units 140 and 150, one end and the other end of the video display unit 110 are connected to connecting members 113 and 114 through connecting portions 111 and 112 to be able to turn on a horizontal surface; and further the ends of the connecting members 113 and 114 are attached to rod-like connecting members 117 and 118 through connecting portions 115 and 116 to be able to turn on a horizontal surface.

Since the connecting portions 111, 112, 115 and 116, that is, two on the left and two on the right to be four in total are given, as described above the video display unit 110 can be held favorably from the state in which the head mounted display 100 is not being worn and so the left and right driver units 140 and 150 are close to each other to the state in which the video display unit is being worn and so the left and right driver units 140 and 150 are apart from each other.

The rod-like connecting members 117 and 118 connected to the video display unit 110 pass through through-holes 121a and 122a of shaft holding portions 121 and 122 fixed to connecting members 123 and 124, and by adjusting the length of the rod-like connecting members 117 and 118 protruding from the through-holes 121a and 122a, the distance between the video display unit 110 and a wearer's eyes can be adjusted.

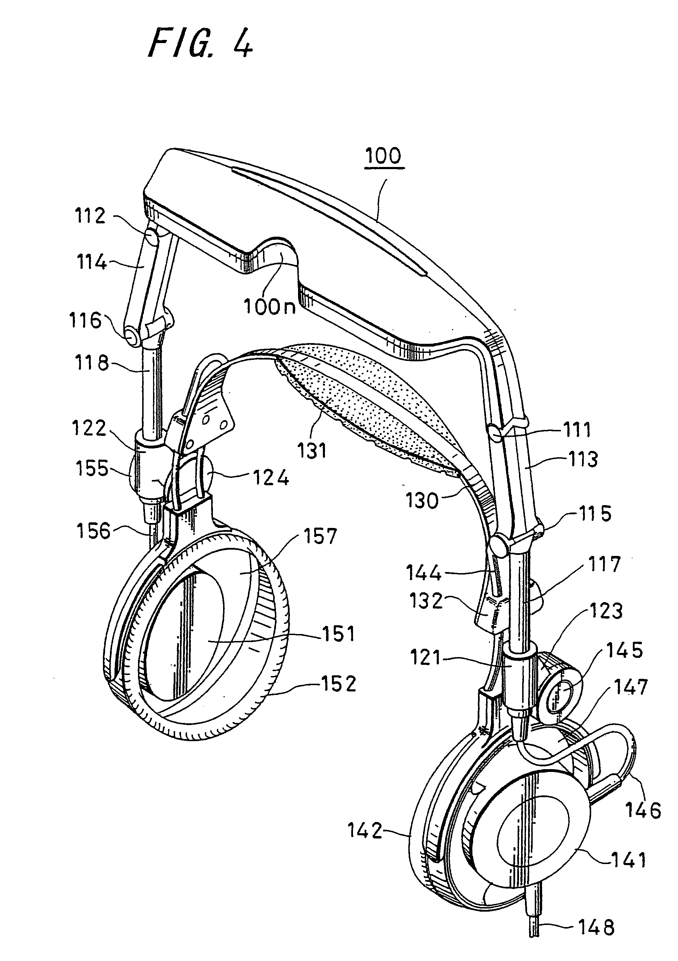

Further, the connecting members 123 and 124 are connected to the sides of the left and right driver units 140 and 150 through connecting portions 145 and 155 to be able to turn up and down; this turning enables the video display unit 110 to be lifted up. FIG. 4 is a view showing an example of a state in which the video display unit 110 has been lifted up. When the video display unit 110 has been lifted up in this manner, the video display unit 110 is positioned above the band 130. In addition, the video display unit 110 is electrically connected to the insides of the left and right driver units 140 and 150 through cords 146 and 156 which are exposed to the outside from the rear ends of the rod-like connecting members 117 and 118, and so video signals obtained through a cord 148 connected to a video signal source are supplied to the video display unit 110; also, audio signals from the video signal source are supplied to the right driver unit 150 through the cords 146 and 156. Further, two sensors not shown in the figure are incorporated in the driver unit 150 (or in the video display unit 110), and control data based on the sensor outputs is supplied to the video signal source side through the cord 148.

Further, although not shown in the figure, a reset switch is installed in a predetermined position (for example, in one driver unit 140) of the head mounted display 100 of this embodiment, and also other key switches, operating means for the volume and the like are disposed, if necessary.

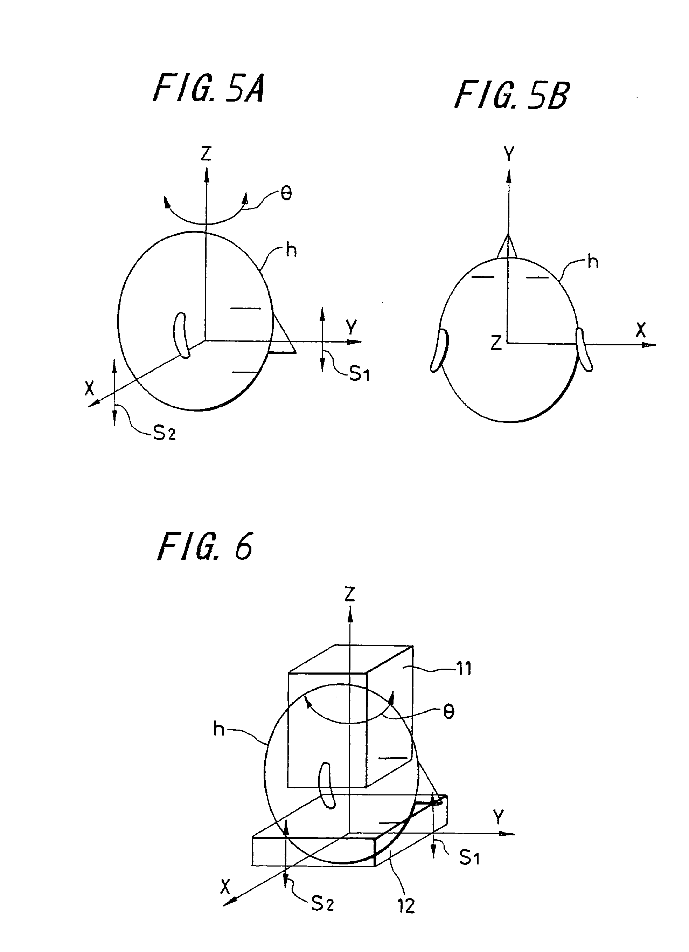

Next, in the head mounted display 100 of this embodiment, the principle of processing and a structure which detects the direction the head of a wearer faces is explained, referring to FIGS. 5 and 6. As shown in FIG. 5A, an axis which is erected through the head h in a state of erection is designated as a Z-axis, and considering two axes of an X-axis and Y-axis, both of which intersect the Z-axis at right angles, the three-dimensional coordinate position of the direction the head of a wearer faces is considered. As shown in FIG. 5B, the X-axis is an axis in the right-to-left direction of the head, and the Y-axis is an axis in the front-to-back direction of the head. On this occasion, the horizontal turning of the head h is shown by a yaw angle θ, which is an angle turning around the Z-axis; the inclination of the head h in the front-to-back direction is shown as a pitch angle (angle in the direction of bowing), which is an angle formed between the Z-axis and the Y-axis; and the inclination of the head h in the right-to-left direction is shown as a roll angle (angle in the direction of the head leaning sideways), which is an angle formed between the Z-axis and the X-axis.

In order to accurately detect the three-dimensional direction the head of a wearer faces, it is necessary to detect the yaw angle θ, the roll angle and the pitch angle; accordingly, as a conventional manner, in order to detect each of the angles, the angular velocities have been separately detected by three sensors facing different directions from one another. Here in this embodiment, the yaw angle θ is detected by one gyro sensor; and the roll angle and the pitch angle are as shown in FIG. 5A judged from the output of a tilt sensor (two-axis tilt sensor) which detects, with the center of a sensor as the origin of the coordinate system of the figure, the inclination in the direction of the X-axis and the inclination in the direction of the Y-axis with respect to a plane (XY plane) formed with the X-axis and the Y-axis. Here, the inclination S1 in the Y-axis direction is equal to the pitch angle which is the angle in the X-axis turning direction; and the inclination S2 in the X-axis direction is equal to the roll angle which is the angle in the Y-axis turning direction.

It should be noted that since the tilt sensor is a sensor measuring the static acceleration gravity, the tilt sensor can only detect a judgment in the range of ±90°; however, the range includes the turning angle of the head of a person who is in a upright position, so that the turning position of the head of a person can be detected. Further, since the pitch angle and the roll angle are the outputs with the static acceleration gravity being the absolute coordinate axis, a drift phenomenon is not caused by the sensor. Since thee acceleration of S1 and S2 in the direction of the Z-axis is acceleration in the same direction, the acceleration of S1 and S2 is detected by as shown in FIG. 6 one acceleration sensor 12 which detects the acceleration in the direction of the Z-axis to judge the roll angle and the pitch angle. Further, the yaw angle θ is judged by the acceleration output from a gyro sensor 11 detecting the acceleration in this direction. As already described, those two sensors 11 and 12 are disposed somewhere in the head mounted display 100.

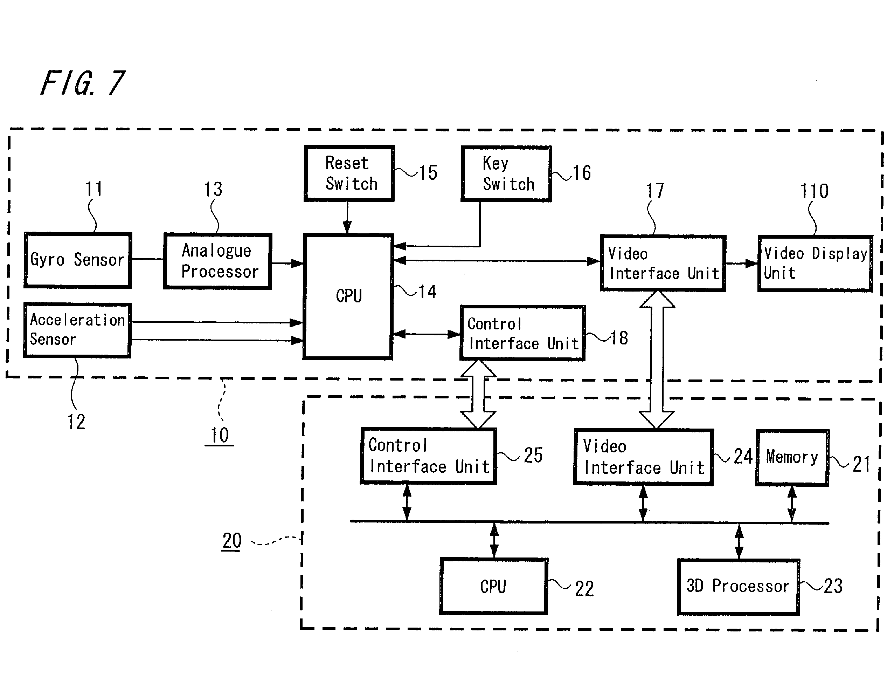

Next, the circuit configuration of the head mounted display 100 of this embodiment is explained referring to the block diagram of FIG. 7. In FIG. 7, the configuration of a video signal source 20 which is connected to the head mounted display 100 through the cord 148 is shown as well.

The gyro sensor 11 installed in the head mounted display 100 supplies an acceleration signal output from the sensor 11 to an analogue processor 13 where analogue processing such as filtering by a low-pass filter, amplification, and the like are performed, and then the signal is made to be digital data and is supplied to a central control unit 14. In this configuration, the tilt sensor 12 is a sensor outputting an acceleration signal as a PWM signal which is a pulse-width modulation signal, and supplies to the central control unit 14 an inclination state in the X-axis direction and an inclination state in the Y-axis turning direction separately as PWM signals. The roll angle and the pitch angle are calculated based on these PWM signals supplied.

Further, the operation of a reset switch 15 and a key switch 16 which are provided in the head mounted display 100 is detected in the central control unit 14. In the central control unit 14, the position at the time the reset switch 15 is operated is made a reference position, and the movement of the head of a wearer from the reference position is detected based on the outputs of the gyro sensor 11 and the acceleration sensor 12. The yaw angle, which is the direction that the front of the head faces, is calculated based on the output of the gyro sensor 11. It should be noted that the yaw angle calculated based on the output of the gyro sensor 11 may be corrected using the roll angle and the pitch angle calculated based on the output of the tilt sensor 12. Specifically, if the yaw angle changes with the head leaning in a particular direction to a relatively great extent, for example, there is a possibility of an error occurring in the yaw angle detected from the output of the gyro sensor 11, so that in such a case, the yaw angle may be corrected using the roll angle and the pitch angle calculated.

Data of the calculated angle of each of the three axes (yaw angle, roll angle and pitch angle) which have been calculated in the central control unit 14 is sent from a control interface unit 18 to the video signal source 20 side as head-tracking angle data.

The video signal source 20 includes a memory 21 which stores, for example, video data of the whole environment of a certain point and audio data which accompanies the video data; a central control unit 22 which retrieves video data in the direction shown by the head-tracking angle data detected in the head mounted display 100 from among the video data stored in the memory 21 and then supplies the data to a 3D processor 23; the 3D processor 23 which makes the supplied video data into video data for picture display; a video interface unit 24 which supplies the video data made in the 3D processor 23 to the head mounted display portion 100; and a control interface unit 25 which receives the head-tracking angle data detected in the head mounted display 100.

The video data supplied from the video signal source 20 to the head mounted display 100 is received in a video interface unit 17 of the head mounted display 100, and then supplied to the video display unit 110, where processing to display the video data on the left and right video display panels 100L and 100R inside the video display unit 110 is performed. In addition, if the video data is data for three-dimensional display, video data supplied to the left video display panel 100L for display and video data supplied to the right video display panel 100R for display are different. Data reception in the video interface unit 17 and video display in the video display unit 110 are controlled by the central control unit 14 as well.

It should be noted that in the block diagram of FIG. 7, the configuration in which audio data is processed is omitted. With respect to audio data, head-tracking processing is not necessarily performed, however if stereo sound is output, the direction in which the sound is localized may be changed to the angle shown by the head-tracking angle data. The video signal source 20 is formed of arithmetic processing executing means such as a personal computer apparatus, video game equipment, PDA (Personal Digital Assistants) and mobile phone unit, and mass-storage means which is incorporated (or installed) in the above equipment, such as a hard disc, optical disc or semiconductor memory, for example.

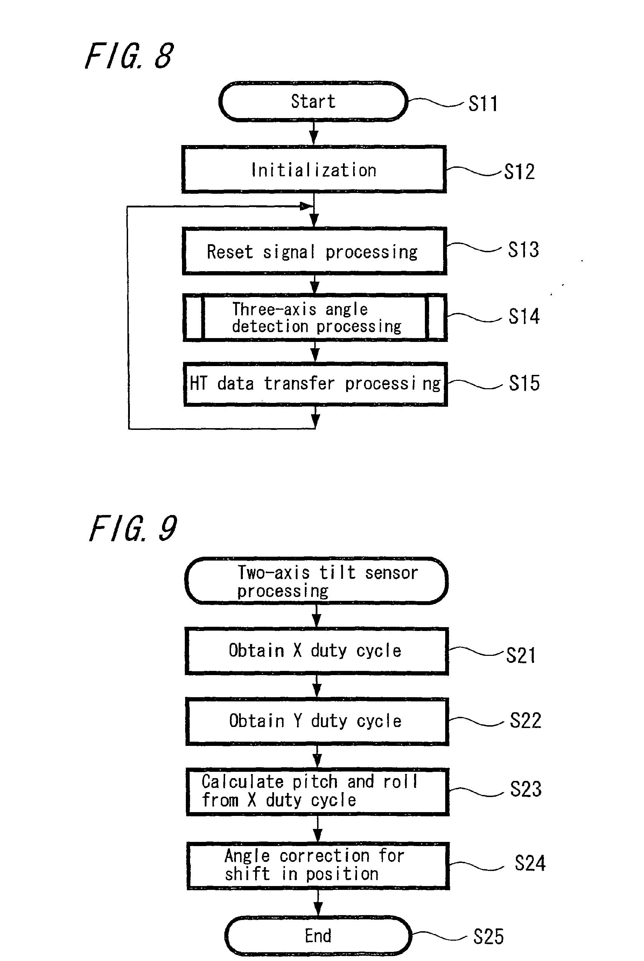

Next, an example of head-tracking processing which obtains head-tracking angle data in the head mounted display 100 of this embodiment is explained, referring to the flow charts of FIGS. 8 to 10. First, the main processing of head-tracking is explained referring to the flow chart of FIG. 8; when the head mounted display 100 is switched on (Step 11), initializing processing by the output of various initializing orders is executed (Step 12), and after that, reset signal processing is executed (Step 13). In the reset signal processing, by means of the operation of the reset switch 15 or of a demand for a reset signal from the video signal source 20, head-tracking data according to the posture of a wearer at that moment is stored, and the head-tracking data that will be signaled is made 0° with the posture. In this case, for example, there is no problem with respect to the yaw angle because it can be detected in the range of ±180°; however, with respect to the pitch angle and the roll angle, since the range which can be detected is within ±90°, such processing is executed, in which the posture angle that can be reset with respect to the two axes is confined to the vicinity of a plane that intersects at right angles the Z-axis shown in FIGS. 5 and 6.

Next, three-axis angle detecting processing is executed (Step 14). In this three-axis angle detecting processing, two-axis tilt sensor processing and gyro sensor processing are executed. FIG. 9 is a flow chart showing the two-axis tilt sensor processing. In the two-axis tilt sensor processing, the duty ratio of the X-axis and also the duty ratio of the Y-axis of a PWM signal supplied from the tilt sensor 12 are detected (Steps 21 and 22). Then, the pitch angle and the roll angle are calculated from each duty ratio (Step 23). Further, if the acceleration detecting axis of the tilt sensor 12 is shifted in the direction of the yaw angle on the XY plane, with respect to a wearer's X-axis and Y-axis, the pitch angle and the roll angle which have been calculated are corrected for the shift (Step 24); and the two-axis tilt sensor processing is over (Step 25).

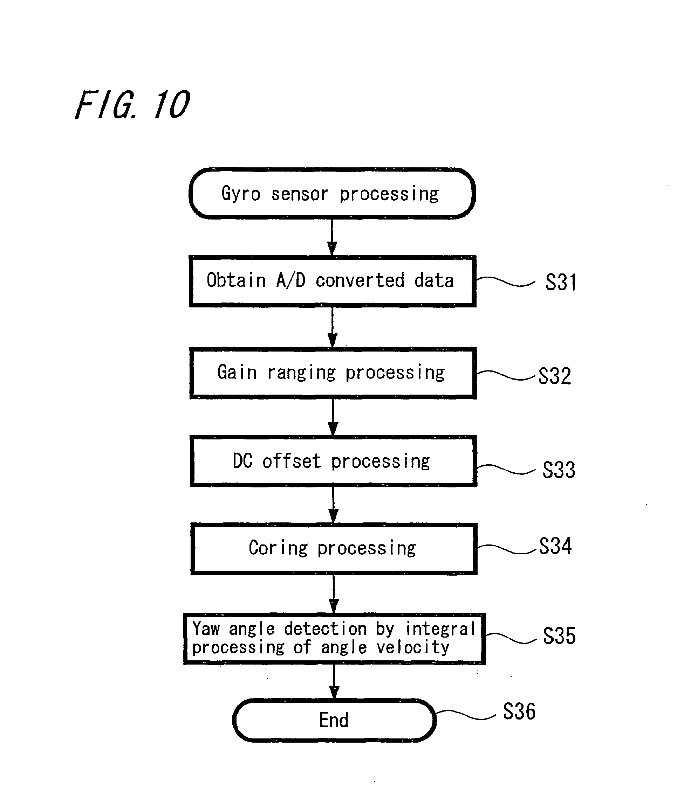

FIG. 10 is a flow chart showing gyro sensor processing. In the gyro sensor processing, first, data to which the output from a gyro sensor has been digitally converted is obtained (Step 31). Next, digital conversion takes place in a plurality of central control units with different gains, gain-ranging processing is executed in order to augment dynamic range (Step 32), and further, processing to cut DC offset of the gyro sensor 11 is performed (Step 33). Further, coring processing for cutting noise elements is executed (Step 34), the yaw angle is calculated by means of the integral processing of angular velocity data (Step 35), and thus, the gyro sensor processing is over (Step 36). As described above, when the yaw angle is calculated in Step 35, the yaw angle which has been calculated may be corrected based on the pitch angle and the roll angle which have been detected in the two-axis tilt sensor processing.

Returning to the main processing in FIG. 8, the head-tracking angle is calculated, using the yaw angle, the pitch angle and the roll angle which have been thus calculated, processing of transferring the head-tracking angle data to the video signal source side is performed (Step 15); and the operation flow returns to the reset signal processing in Step 13. Note that if no operation of the reset switch take place or no reset signal is supplied in the reset signal processing, the flow returns to the three-axis angle detecting processing in Step 14.

In the three-axis angle detecting processing in Step 14, as the two-axis tilt sensor processing, the static acceleration gravity is detected to calculate the angle of inclination at the time of the detection, whereas in the gyro sensor processing, the yaw angle is calculated by detecting a dynamic acceleration element and by performing integration; therefore, each processing may have a different period. If head-tracking angle data is used for selecting a range of taking out video, a delay in the head-tracking detection becomes a matter of importance, so that the head-tracking processing needs to be completed for transfer at least within the renewal rate of video, and it is important to execute the two-axis tilt sensor processing of FIG. 9 and the gyro sensor processing of FIG. 10 in such a period as makes the distribution of the processing time the most efficient. As an example, the above described renewal rate can be satisfied by using a general-purpose microprocessor with a 16-bit processor to be the central control unit, and executing the two-axis tilt sensor processing in the period of 125Hz and the gyro sensor processing in the period of 1.25Khz.

According to the head mounted display 100 configured in this manner, it is possible to display video which is linked to a movement of the head of a wearer; therefore, a video of what is called virtual reality can be displayed. Further, with respect to a sound, audio on which head tracking is performed can be output.

As sensors which detect the head-tracking angle, a gyro sensor and a two-axis tilt sensor are only needed, so that the three-dimensional head-tracking angle can be favorably detected with a simple structure using only two sensors. With respect to the pitch angle and the roll angle, although detection range thereof is confined to ±90°, the range is sufficient when a posture angle according to an ordinary movement of a person's head is detected, hence no practical problem remains. Further, in the case of this embodiment, the pitch angle and the roll angle are detected using a tilt sensor, so that a drift phenomenon does not arise, and a virtual 3D space in video or the like which is stable in the horizontal direction can be obtained with ease and at low cost. Furthermore, since the number of sensors is small, the burden of arithmetic processing in calculation means (central control unit) which calculates the head-tracking angle can be reduced. Furthermore, since not many sensors are required, the head mounted display itself can be made compact, and so the feeling that is felt when the head mounted display is being worn can be improved.

In addition, in the case of a head mounted display in the shape of this embodiment that is shown in FIGS. 1 to 4, a video display unit is attached to what is called full-open-air type headphones to function as a head mounted display; therefore, the head mounted display can be worn with much the same feeling that is felt when conventional full-open-air type headphones are worn, which is favorable for a head mounted display. Further, as shown in FIG. 4, if the video display unit 110 is lifted up, the head mounted display can be used as headphones, which adds to the versatility of the device.

It should be noted that with respect to the outer shape of the head mounted display shown in FIGS. 1 to 4, only an example is shown, and needless to say the present invention can be applied to head mounted displays of other shapes. Further, the head-tracking processing of the present invention may be applied to a headphone device (that is to say a device without video display function) in which the sound localization positioning of a stereo sound is executed by head tracking.

Furthermore, in the above described embodiment, a reset switch is provided in a head mounted display, the position where the reset switch was operated is made a reference position, and a movement from the position is detected; however, it should be noted that by detecting an absolute direction in some other ways (for example a terrestrial magnetism sensor, etc.), head-tracking processing may be executed by an absolute angle, without providing a reset switch.

## Claims

1. A head-tracking method in which the three-dimensional direction the head faces is detected by three axes of a yaw angle that is an angle turning around an erect axis erected on the horizontal surface of the head, and a pitch angle and a roll angle that are angles formed by said erect axis and two axes perpendicular thereto, wherein
said yaw angle is judged from the integral value of the output of a gyro sensor, and
said pitch angle and said roll angle are calculated from the output of a tilt sensor which detects the inclination of a plane that intersects the direction of said erect axis at right angles.

2. A head-tracking method according to claim 1, wherein
a period to judge the yaw angle from the output of a gyro sensor is shorter than the period to calculate the pitch angle and the roll angle from the output of said tilt sensor.

3. A head-tracking method according to claim 1, wherein
the yaw angle judged from the output of the gyro sensor is corrected using the judged pitch angle and roll angle.

4. A head-tracking device in which the three-dimensional direction the head faces is detected by three axes of a yaw angle that is an angle turning around an erect axis erected on the horizontal surface of the head, and a pitch angle and a roll angle that are angles formed by said erect axis and two axes perpendicular thereto, comprising:
a gyro sensor for detecting said yaw angle,
a tilt sensor which detects the inclination of a plane that intersects the direction of said erect axis at right angles, and
calculation means to judge the yaw angle from the integral value of the output of said gyro sensor, and to calculate said pitch angle and said roll angle from the angular velocity output of said tilt sensor.

5. A head-tracking device according to claim 4, wherein
with respect to said calculation means, a period to judge the yaw angle from the output of said gyro sensor is shorter than that to calculate the pitch angle and the roll angle from the output of said tilt sensor.

6. A head-tracking device according to claim 4, wherein
said calculation means performs correction of the yaw angle judged from the output of said gyro sensor using the calculated pitch angle and roll angle.
